# EUROPEAN PATENT APPLICATION

(11) **EP 2 546 791 A1**
(43) Date of publication of application: **16.01.2013**
(21) Application number: 10719012.6
(22) Date of filing: 08.03.2010
(51) Int. Cl.: G06Q 20/00

(54) **METHOD AND SYSTEM FOR PERFORMING A TRANSACTION**

(71) Applicant: Telefónica, S.A., 28013 Madrid (ES)
(72) Inventor: MARTÍNEZ ELICEGUI, Javier, 37005 Salamanca (ES); ORTEGA BARRADO, Pedro, José, E-28005 Madrid (ES); VILLOSLADA DE LA TORRE, Eduardo, E-47007 Valladolid (ES)
(74) Representative: Carpintero Lopez, Francisco
(86) International application number: PCT/ES2010/070128
(87) International publication number: WO 2011/110697

(57) **Abstract**

The invention relates to a method and system for performing a transaction, comprising the following steps:
providing an image valid only for a determined transaction (520);
displaying the image on a screen of a communication terminal of a first user involved in the determined transaction;
recognizing the displayed image through a terminal of a second user involved in the determined transaction;
verifying the validity of the recognized image (565); and
once the image has been validated, performing the determined transaction (585).

## Description

### Technical Field of the Invention

The present invention relates to the sector of performing transactions and more particularly to performing payment transactions.

### Background of the Invention

The context of Points of Sale (POS) http://en.wikipedia.org/wiki/Point of sale (Point of Sale Terminal which accepts Card Payments) has always been subject to strict regulations and surveillance so that it offers the greatest assurances against possible frauds in payments with credit and debit cards.

The different card brands (for example: VISA, MasterCard, American Express) define the technology and methods under which the payments will be accepted. In order for a POS to be incorporated as an approved card payment element, it has to comply with a series of physical and software standards included in the PCI Security Standards Council and EMV (Europay, MasterCard and Visa. Standard interoperability model for payment cards with an incorporated chip developed by Europay, MasterCard and Visa) requirements.

EMV (Europay, MasterCard and Visa) http:Hen.wikipedia.org/wiki/EMV is a widespread standard, developed by the Europay, MasterCard and VISA alliance for the interoperability of chip cards. These cards incorporate a chip as protection against the fraud experienced by magnetic strip cards, for example cloning, capture of data from the magnetic strip, substitution of the signature with a PIN, etc.

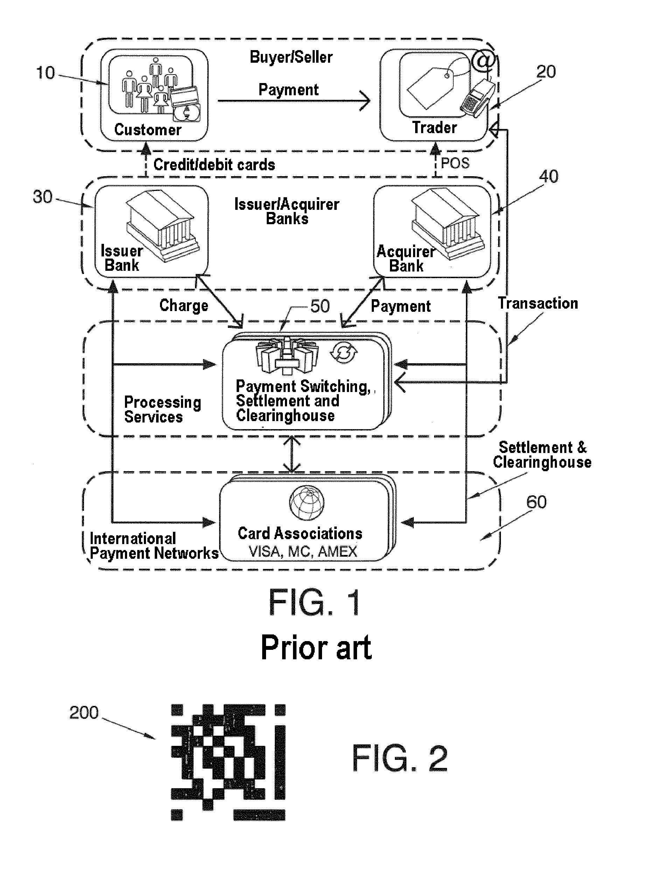

Figure 1 shows a classic scheme of the Card Payment Process for the case of a store located in a first country and a customer having a card 10 with an issuer bank 30 of another country.

Some aspects of the payment process through a credit/debit card which are to be emphasized are detailed below. The POS 20 are connected to an acquirer bank 40 which is in charge of processing the transactions of the POS. The trader has a bank account in which the payments are deposited. The credit/debit cards 10 of the paying users are associated with a bank account of an issuer bank in which the amounts of the payments are charged. Depending on whether the card is a debit or credit card, the charge is immediate or it is postponed for a time period (the bank 30 advances the amount to the trader as a loan towards the user of the card). Every time a payment is made with a card, the POS communicates with intermediate entities between banks, represented by the Processing Services Layer 50 in charge of switching the transaction to the card issuer bank 30 (Payment Switch function) and of certifying the result thereof (Settlement and Clearinghouse function). The Processing Services Layer is occasionally supported on International Payment Networks 60 (usually managed by an infrastructure of the card brands) to contact an issuer bank which is in any other country of the world.

The introduction of the mobile telephone as a payment means is revolutionizing the market of small POS, usual in small-sized stores, a market which up until now was dominated by a few brands such as Hypercom, Thales, Ingenico and Verifone. Examples of mobile telephone-based solutions are the following:
- The mobile telephone is modified to incorporate a secure keyboard and/or a card reader (optionally an external Bluetooth printer). An example of this type of solution is MTT Way Systems or Mophie iPhone credit card reader.
- The data of the card are manually entered into the mobile telephone, because there is no card reader, similar to how it is performed in a purchase by Internet (e.g.: iPhone application TechFlash).
- A device with a card reader and printer, which communicates by Bluetooth or by cable with the payment program housed in the mobile telephone (e.g.: Intuit GoPayment, Pocket POS Blue Bamboo, EverMobile, CellTreck FirstData, Square iPhone Payment System).
- A secure keyboard and a card reader connected to the mobile telephone (e.g.: HomeATM).

The main reasons for which mobile telephone-based POS solutions which tend to replace conventional POS are arising are the following:
- Costs: Current POS are expensive to manufacture and maintain. Substituting them with the mobile telephone of each person is a clear way to reduce costs. The large sale volumes of mobile telephones cause a spectacular technological dynamism and cost reduction which can be used by mobile telephone-based POS.
- Usability: For mobile professionals (plumbers, florists, pizza delivery men, etc.) it is much more attractive to use the actual mobile telephone as a POS and not have to carry an additional bulky and heavy POS. This drawback is emphasized when the volume of payments is relatively small.
- Security: With the new EMV standard, the signature as payment authorization is substituted with entering the PIN. Having to enter the personal PIN in the POS of multiple establishments and/or in POS of unknown mobile people is a risk element which can be reduced if the PIN is entered in our own mobile telephone.

On the other hand, the aforementioned solutions for adapting a mobile telephone as a POS still have the following problems:
- The main drawback of the mobile telephone incorporating a secure keyboard and/or a card reader is the cost of physically modifying the telephone.
- In the event of manually entering the card data in the mobile telephone, similar to a purchase over the Internet, this is considered a method vulnerable to fraud and entails higher commissions of the payment operation. It is referred to as Cardholder Not Present Payment (CNP) since it cannot be assured that the payment is made by the cardholder.
- In the event of using a device with a card reader and printer, which communicates with the payment program housed in the mobile telephone, the following problem arises: the EMV standard requires entering the PIN on a physically secure keyboard and this solution does not have such keyboard. It is also considered a method vulnerable to fraud (CNP).
- If a secure keyboard and a card reader connected to the mobile telephone are used, a good solution from the security and cost point of view is obtained, but from the usability point of view it requires transporting a device additional to the mobile telephone, which can be lost, break down, etc.

Patent application US 2009/0182634 A1 discloses a method and system for using a payment means based on an image stored in the mobile telephone of the user. The image substitutes the credit or debit card. The user shows the image to the POS of the trader to complete a transaction. The image is scanned and the corresponding amount is charged to the user's account. However, this solution is also vulnerable to fraud, since a third party which has the image can use it for illicit payments.

### Description of the Invention

An objective of the invention is to provide a method and a corresponding system by means of which at least part of the aforementioned problems are solved.

Therefore, according to the invention a method and a system according to the independent claims are provided. Favorable embodiments are defined in the dependent claims.

The solution of this invention does not require physical modifications of the mobile telephone, it does not require additional devices, it is cost-effective and can be considered as a solution with a very high security level, which assures with a high level of reliability that the payment is made by the cardholder.

One embodiment of this invention proposes a model in which payment is made with the mobile telephone without requiring carrying the plastic credit/debit cards, and in which the POS is replaced with a mobile telephone.

A balance between security and usability has been sought in this embodiment, using to that end the possibilities offered by BIDI codes and OTP technology. BIDI is a bidirectional graphic code belonging to Movistar (http://saladeprensa.telefonica.es/documentos/nprensa/090626 np BIDIS.pdf). OTP (One Time Password) is a security model in which a different password is generated for each access to a protected resource (http://en.wikipedia.org/wiki/One-time password).

The method of payment is the following:
1. The paying user identifies himself from his mobile telephone in the payment application and requests a BIDI-OTP code for a payment of a certain amount.
2. He then receives a BIDI with a validity of a short time period (e.g.: 2 min).
3. The trader captures with the camera of his mobile telephone the BIDI which the paying user shows to him on his telephone. To that end, the trader has a POS program installed in his mobile telephone which directly handles the camera.
4. The paying user and the POS application receive a message confirming or rejecting the payment (e-ticket).

This method maintains high security levels, preventing displaying or transmitting sensitive data (card data and/or telephone numbers), using a single-use BIDI-OTP code and using digital signatures and certificates which protect the communications as well as the application and information stored in the mobile telephone.

### Description of the Drawings

The invention will be better understood and its numerous objectives and advantages will be more evident for the persons skilled in the art with reference to the following drawings, together with the attached specification, in which:
Figure 1 shows a scheme of the card payment process of the prior art.
Figure 2 shows an example of a BIDI code.
Figure 3 shows a BIDI-OTP architecture according to an embodiment of the invention.
Figure 4 shows the flows of installation of the applications necessary for putting into practice the embodiment according to Figure 3.
Figure 5 shows the flows of payment according to the embodiment shown in Figure 3.

In all the figures the same reference numbers refer to identical elements.

### Preferred Embodiments of the Invention

In view of the indicated figures, a practical embodiment of the invention can be described herein. A new scheme of payment for credit/debit cards based on mobile telephony and on BIDI-OTP codes has been designed. BIDI-OTP code is understood as a BIDI code which is only valid during a transaction and which expires after a brief time period has elapsed from its activation. Figure 2 shows an example of a BIDI code 200.

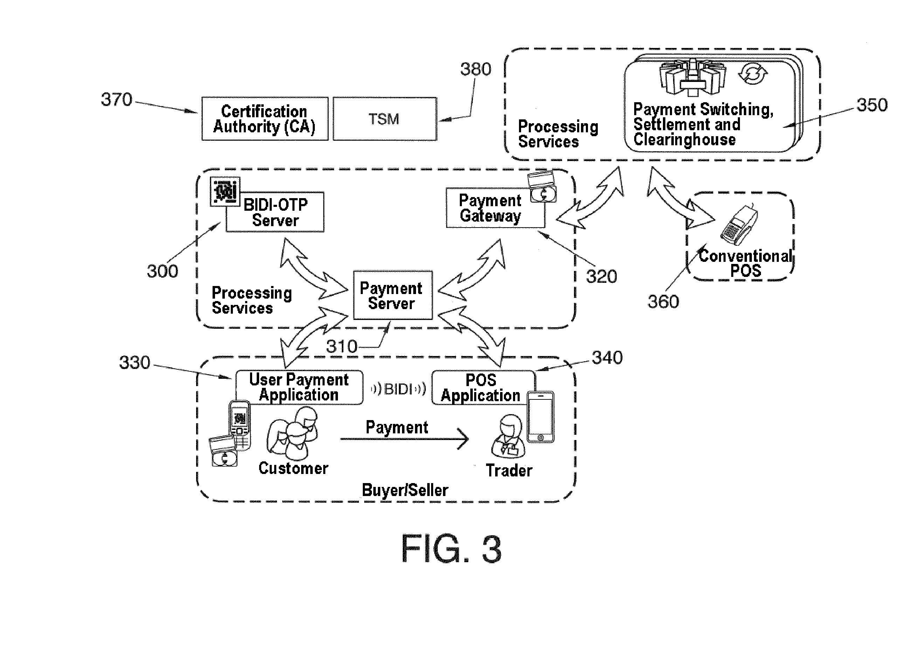

The elements of the architecture object of an embodiment of the invention can be identified in Figure 3. These elements are:
a BIDI-OTP server 300 comprising the software in charge of creating and managing the BIDIs during the lifetime assigned thereto.
a payment server (transaction server) 310, which is the central part of the embodiment. It comprises the software managing and coordinating the payment process, establishing the communication with the rest of the elements of the architecture. Likewise, it maintains the databases with the confidential information of the solution (card data, telephone numbers, etc) under strict security measures.
a payment gateway 320, comprising the software in charge of routing the payment transactions generated from the POS solution with BIDI-OTP, towards the entities offering the Processing Services on different POS technologies.

The BIDI-OTP server 300, the payment server 310 and the payment gateway 320 as a whole can be considered to offer a new type of Processor Service referred to as BIDI-OTP POS.

The architecture furthermore comprises:
a user payment application 330, which is the software installed in the mobile telephone of the paying user.
a POS application 340, which is the software installed in the mobile telephone of the trader incorporating the typical functions of a POS.
Payment Switching, Settlement and Clearinghouse 350: are the usual Services in the Card Payment Means, performed in Spain by financial institutions such as SERMEPA, Red 6000, etc.
a conventional POS 360, representing the current POS connected to the Switching, Settlement and Clearinghouse Services.
a certification authority (CA) 370, which is the entity in charge of issuing the digital certificates used in the embodiment.

Trusted Service Manager (TSM) 380: A term generated by GSMA (GSM Association, the association representing the interests of the worldwide mobile telephony industry) to refer to the entity which has the keys of access to the SIM/UICC (SIM: Subscriber Identity Module; UICC: Universal Integrated Circuit Card, it is the equivalent to the SIM in UMTS) of mobile telephones and which can update the software or the confidential information contained therein of the different services.

Having set forth the elements of the architecture, several typical scenarios are described below.

For the commercial registration in the BIDI-OTP payment service, the paying user must be registered. To that end, he must certify his identity and execute the legal contract with his rights and obligations, either in person or by any remote method as done by Internet banking.

The trader, as is done currently, must request access to the POS Service, certifying himself and complying with the legal requirements demanded by the Bank Acquirers.

Once both the paying user and the trader have been registered, they must install the software of the application in the mobile telephone, either downloading it through the Internet or by other means. For example, there is also the possibility that the operator installs the program in the SIM/UICC, either pre-installed or by an update using OTA (Over The Air; a method by which operators can remotely update the information of the SIM/UICC of the telephones).

For security reasons, the software is signed and the communications are encrypted through digital certificates. The software of the mobile telephone is signed with a digital certificate, thus being protected against being substituted with malicious software (trojans). Furthermore, the software has access to privileged information of the service stored in the SIM/UICC (for example: key of use of the BIDI-OTP service, card list, payment limits, etc.) and uses the cryptographic module of the SIM/UICC to code/decode the communications with the payment server.

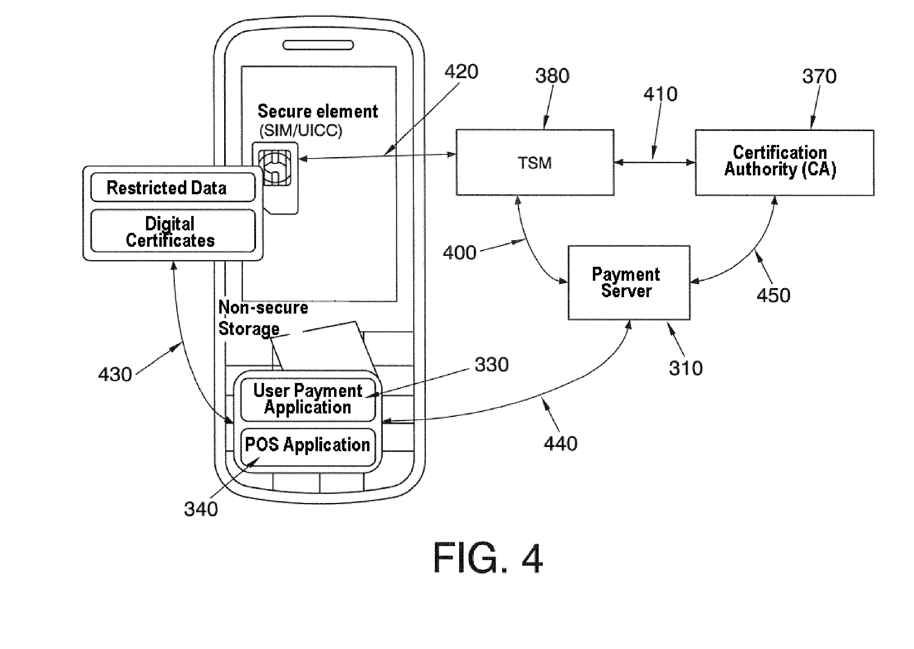

The flows of installation/configuration of the BIDI-OTP service are described below with the aid of Figure 4:
1 - The BIDI-OTP service is registered in the SIM/UICC once a new paying user/trader has subscribed.
   1.1 - The payment server 310 requests the TSM 380 to update the parametrization of the BIDI-OTP service in the SIM/UICC (step 400).
   1.2 - The TSM 380 requests new certificates from the certification authority 370 (step 410).
   1.3 - The TSM 380 updates the information in the SIM/UICC through OTA (step 420).
2 - The paying user/trader configures the service.
   2.1 - The user payment applications 330 or POS 340 access the parametrization of the service stored in the SIM/UICC (step 430). Likewise, they request from the paying user/trader the key of access to the service which is compared with the key stored in the SIM/UICC.
   2.2 - Once the paying user/trader enters his configuration data (for example aspects of usability or card data), the non-confidential data are saved in the non-secure storage of the mobile telephone and the confidential data are encrypted and sent to the payment server 310 (step 440).
   2.3 - The payment server 310 initially access the certification authority 370 (step 450) to obtain the public key and decrypt the received information, to then store in its database the information received or update the information of the SIM/UICC (steps 400 and 420).

There is also the option of remotely accessing the user payment application 330/POS 340 through the Web browser of the mobile telephone. This option has the advantage of not having to install the application in the mobile telephone, but, however, it is more vulnerable to fraud and requires having data communication. Likewise, in the case of the POS application, the installation of a plug-in is required to handle the camera of the mobile telephone.

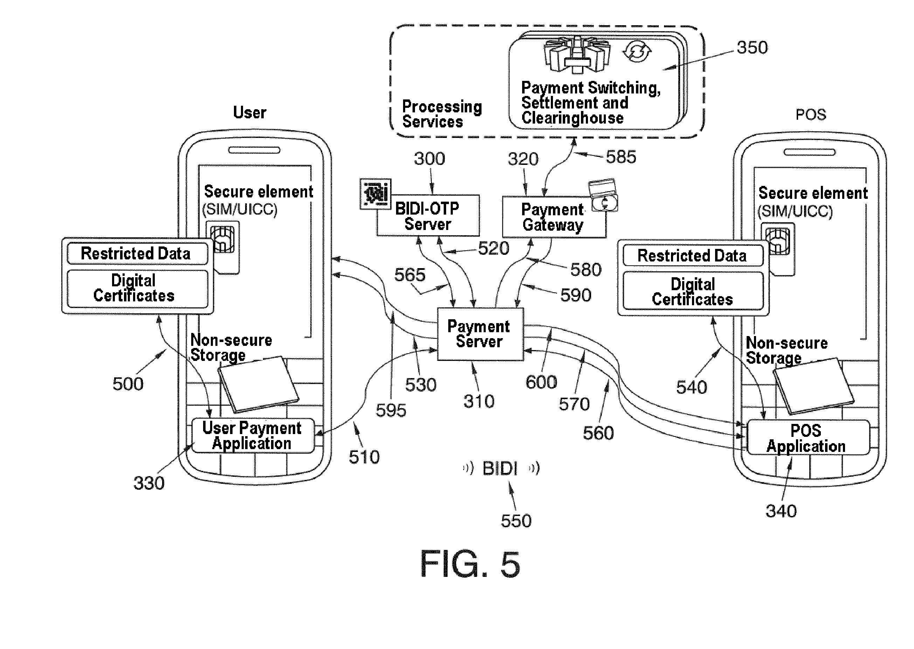

The flows of payment of the embodiment with BIDI-OTP are described below with reference to Figure 5.

The paying user executes the user payment application 330. For the sake of security, the application is identified to the user/payer, displaying personalized information of the service stored in the SIM/UICC which a false program could not know (step 500).

Then, the key of access to the service and the payment data (amount, card, ...) are requested from the paying user. The configuration can be such that payments of a small amount do not request a key and have associated therewith a card by default, simplifying the operation in these cases.

The payment data are sent to the payment server 310. This information is encrypted and can be sent by SMS or by direct communication through the Internet (step 510), as appropriate in each case due to the characteristics of the telephone and/or type of telephone contract of the customer.

The payment server 310 obtains from the BIDI-OTP server a new BIDI with expiration for a limited time period (for example: 2 minutes) (step 520).

The payment server 310 sends to the telephone a BIDI-OTP having validity for the requested payment (step 530). This BIDI can be sent by MMS or by direct communication with the user payment application when the mobile telephone has direct access to the Internet.

The trader executes the POS application 340. This application follows security methods similar to those described for the user payment application (step 540), such as requesting a key and displaying personalized information of the service stored in the SIM/UICC which a false program could not know.

The BIDI image is displayed on the screen of the mobile telephone of the paying user and the trader moves the camera of his mobile telephone closer to the mobile telephone of the paying user to recognize said BIDI image (step 550). In situations with difficulties in recognizing the BIDI image, it is possible, as an alternative method, to enter in the POS the reference number accompanying the BIDI-OTP. This number is also an OTP which does not provide any confidential information.

The POS application 340 sends the information of the BIDI to the payment server 310 in an encrypted manner (step 560). For security and usability reasons (there is a sequence of information exchanges), this communication is preferably not by MMS or SMS but rather by direct data access through the Internet.

The payment server 310 verifies through the BIDI-OTP server 300 the validity of the received BIDI (step 565), notifying the POS of the error in the event of an anomaly.

Once the BIDI has been validated, the payment server 310 informs the POS application 340 of the characteristics of the transaction (for example: Payment/Return, amount, etc.) so that the trader accepts/rejects it (step 570).

Once the operation has been accepted by the trader, the payment server 310 informs the payment gateway 320 of the card data and amount of the payment (step 580).

According to the characteristics of the payment, the payment gateway 320 passes on the transaction to the payment card processor which is most appropriate in each case (step 585). Once a response has been obtained, the payment gateway informs the payment server 310 of the authorization or rejection of the payment (step 590).

The payment server 310 informs the paying user of the result of the transaction and of the reference of the payment (e-ticket) (step 595). This communication is by SMS or by direct communication through the Internet, as appropriate in each case due to the characteristics of the telephone and/or type of telephone contract of the customer.

The payment server 310 informs the POS application 340 of the result of the transaction (step 600).

In the case of a payment return, the paying user selects the application option corresponding to returns, providing the reference number of the transaction to be returned, and the associated amount.

This return information is communicated to the payment server 310 which verifies if the reference is correct and it if belongs to a payment made by the same paying user-trader reference. The rest of the flow is similar to the flow described above for a payment.

For the consultation/printing of electronic tickets, the paying user and the trader can access through the Web to be consulted their transactions and print detailed information thereof.

According to the described embodiment of the invention, current mobile telephones of paying users are adapted as a payment means for credit/debit cards. This solution allows the users to make payments of their credit/debit cards through their mobile telephone, in a manner similar to pilots with NFC (Near Field Communications. Wireless communication standard, see http://en.wikipedia.org/wiki/Near Field Communication) developed by VISA, MasterCard, etc., but without needing to have a telephone with NFC technology.

It is provided that the massive use of mobile telephones with NFC can continue for a series of years. This BIDI-OTP solution is compatible with the NFC solution, such that there can be a POS accepting both payments by NFC and BIDI for all current telephones.

According to the described embodiment of the invention, the mobile telephones of traders are adapted as a POS. This solution allows adapting by software any telephone with a camera as a POS. The trader can reuse his telephone as a POS without needing to carry an additional device. This advantage is emphasized when the volume of payments is relatively small.

Special attention has been paid to the usability, offering a simple method of payment from mobile telephones for the paying user and the trader.

This solution maintains high security levels, preventing risks of disclosing sensitive data of the paying user and of the trader, such as the information of theirs cards and their telephone numbers. The BIDI-OTP does not incorporate any information about the card or the telephone, it is only a temporary code which the payment server knows how to associate with the data of a transaction.

It furthermore incorporates a 2 factor security scheme (A2F), requiring having the SIM/UICC and knowing the key of access to the service. In the event of theft or loss of the telephone, the service cannot be used by third parties since they do not know the key thereof and in the event that the key is known it is not possible to access the service from another mobile telephone with another SIM/UICC. In the event of theft or loss, for the purpose of minimizing risks, the service can be easily deactivated and transferred to another mobile telephone (and SIM/UICC) once the incident is reported.

Since it is a software solution, it is a solution which can be easily implemented (time-to-market) and with a low cost.

Although the invention has been illustrated and described in detail in the drawings and in the description above, such illustration and description must be considered as illustrative and non-restrictive examples; the invention is not limited to the embodiments disclosed.

For example, another type of image for a single use can be used rather than BIDI images.

## Claims

1. Method for performing a transaction, **characterized in that** it comprises the following steps:
providing an image valid only for a determined transaction (520);
displaying the image on a screen of a communication terminal of a first user involved in the determined transaction;
recognizing the displayed image through a terminal of a second user involved in the determined transaction;
verifying the validity of the recognized image (565); and
once the image has been validated, performing the determined transaction (585).

2. Method according to claim 1, **characterized by** the steps of:
requesting the image valid only for a determined transaction through the communication terminal of the first user (510);
receiving the image by the communication terminal (530);

3. Method according to claim 1, **characterized in that** the image is a two-dimensional graphic representation formed by grids of the same size.

4. Method according to any of the previous claims, **characterized in that** a message is sent to the first and second user confirming or rejecting the transaction (595,600).

5. Method according to any of the previous claims, **characterized in that** a key of access and the data of the determined transaction (500) are requested from the first user.

6. Method according to any of the previous claims, **characterized in that** the determined transaction is a payment or a payment return with a credit or debit card.

7. Method according to any of the previous claims, **characterized in that** the communication terminal is a mobile telephone, comprising a secure element for storing privileged information of the service.

8. Method according to claim 7, **characterized in that** the secure element is a SIM or UICC card.

9. Method according to claim 7 or 8, **characterized in that** privileged information for the transaction service is stored in the transaction server (440) and in the secure element of the mobile telephone (400 and 420).

10. Method according to claim 9, **characterized in that** the information comprises one or more of: key of use of service; card data and payment limits.

11. Method according to any of claims 7-10, **characterized in that** the data of the transaction are sent to a transaction server (310) in an encrypted manner (510), using the encryption module of the secure element.

12. Method according to any of the previous claims, **characterized in that** the terminal of the second user is a mobile telephone with a camera and **in that** the displayed image is recognized with the camera.

13. Method according to any of the previous claims, **characterized in that** the terminal of the second user sends the data of the image to a transaction server (310) in an encrypted manner (560).

14. Method according to claim 13, **characterized in that** the transaction server verifies the validity of the recognized image and, once validated, informs the terminal of the second user of the characteristics of the transaction so that the second use accepts or rejects it (570).

15. Method according to any of the previous claims, **characterized in that** as an alternative method in the event of difficulties in recognizing the image, entering a reference number which accompanies the image is provided.

16. System for performing a transaction, comprising a communication terminal of a first user involved in a transaction, a terminal of a second user involved in a transaction and a transaction server (310), **characterized in that** the system is configured to:
provide an image valid only for a determined transaction;
the communication terminal of the first user is configured to display the image on a screen;
wherein the receiver user terminal is configured to recognize the displayed image; and wherein the system is configured to:
verify the validity of the recognized image; and
once the image has been validated, perform the determined transaction.

17. System according to claim 16, **characterized in that** the communication terminal of the first user is configured to request the image from the transaction server (310) and receive the image;

18. System according to claim 16 or 17, **characterized in that** the image is a two-dimensional graphic representation formed by grids of the same size.

19. System according to any of claims 16-18, **characterized in that** it is configured to send a message to the first and second user confirming or rejecting the transaction.

20. System according to any of claims 16-19, **characterized in that** the communication terminal is configured to request from the first user a key of access and the data of the determined transaction.

21. System according to any of claims 16-20, **characterized in that** the determined transaction is a payment or a payment return with a credit or debit card.

22. System according to any of claims 16-21, **characterized in that** the communication terminal of the first user is a mobile telephone, comprising a secure element for storing information.

23. System according to claim 22, **characterized in that** the secure element is a SIM or UICC card.

24. System according to claim 22 or 23, **characterized in that** the secure element is configured for the storage of privileged information for the transaction service.

25. System according to claim 24, **characterized in that** the information comprises one or more of: key of use of service; card list and payment limits.

26. System according to any of claims 21-25, **characterized in that** the communication terminal of the first user is configured to send the data of the transaction to a transaction server (310) in an encrypted manner, using the encryption module of the secure element.

27. System according to any of claims 16-25, **characterized in that** the terminal of the second user is a mobile telephone with a camera for recognizing the displayed image.

28. System according to any of claims 16-27, **characterized in that** the terminal of the second user is configured to send the data of the image to the transaction server in an encrypted manner.

29. System according to claim 28, **characterized in that** the transaction server (310) is configured to verify the validity of the recognized image and, once validated, inform the terminal of the second user of the characteristics of the transaction so that the second user accepts or rejects it.

30. System according to any of claims 16-29, **characterized in that** the communication terminal of the first user is configured to, as an alternative method in the event of difficulties in recognizing the image, provide entering a reference number which accompanies the image.
